# NEW EUROPEAN PATENT SPECIFICATION

(11) **EP 1 228 011 B2**
(45) Date of publication and mention of the opposition decision: **05.04.2017**
(45) Mention of the grant of the patent: 07.02.2007
(21) Application number: 00972712.4
(22) Date of filing: 28.09.2000
(51) Int. Cl.: D04H 1/4209, D04H 1/4218, D04H 1/74, D04H 1/655, D04H 13/00, C03B 37/05

(54) **PROCESSES AND APPARATUS FOR THE PRODUCTION OF MAN-MADE VITREOUS FIBRE PRODUCTS**
VERFAHREN UND VORRICHTUNG ZUR HERSTELLUNG VON GLASFASERPRODUKTEN
PROCEDES ET APPAREIL DE PRODUCTION DE PRODUITS A BASE DE FIBRES VITREUSES MANUFACTURES

(30) Priority: 28.09.1999 EP 99119021
(43) Date of publication of application: 07.08.2002
(73) Proprietor: Rockwool International A/S, 2640 Hedehusene (DK)
(72) Inventor: HAULRIK, Joakim, DK-2830 Virum (DK)
(74) Representative: Gill Jennings & Every LLP
(86) International application number: PCT/EP2000/009916
(87) International publication number: WO 2001/023314

(56) References cited:
- WO-A-96/36573
- WO-A-97/32068
- WO-A1-87/06631
- WO-A1-96/38391
- FR-A- 2 736 940
- GB-A- 1 175 315
- SE-A- 443 012
- SE-A- 452 040
- SE-A- 452 041
- US-A- 2 830 648
- US-A- 4 433 992
- US-A- 5 093 069
- US-A- 5 111 552
- US-A- 5 906 669
- English translation of D2
- English translation of D3
- English translation of D5

## Description

This invention relates to apparatus and processes for making man-made vitreous fibre (MMVF) products by a centrifugal spinner technique in which the or each rotor is mounted to rotate about a substantially horizontal axis. It also relates to products having particularly useful combinations of properties and which can be made by the centrifugal spinner technique.

The centrifugal spinner can have a single rotor mounted for rotation on a substantially horizontal axis. More usually the centrifugal spinner is a cascade spinner comprising a first rotor and one or more subsequent rotors each mounted for rotation about a substantially horizontal axis and arranged such that melt poured on to the first rotor is thrown on to the or each subsequent rotor in turn and is thrown centrifugally off the or each subsequent rotor and optionally off the first rotor as fibres. Appropriate motor means are provided to drive the rotor or rotors.

Conventionally, air is supplied around and/or from the spinner whereby the fibres are blown forward from the spinner as a cloud of fibres entrained in air.

The fibres are conventionally collected as a web on a collector through which suction is applied. The collector generally has a continuously moving band or other surface whereby the web is continuously carried away from the point at which the fibres collect on the collector.

Often the web is then cross lapped or otherwise laminated on itself so as to build up the thickness of the fibre product and so as to minimise any variations in thickness or quality that may occur at individual points within the additional web.

It is important to deposit the fibres on the collector in as laminar a fashion as possible. If fibres are deposited randomly, or perpendicular to the plane of the web, for instance as clusters or balls of fibres, this tends to detract from the properties of the web and products made from it. For instance the web, or products made from it, may have inferior tensile strength and may have a visually non-uniform appearance. This problem tends to increase as web thickness increases.

In some processes of making MMVF products, the fibres travel downwardly before they are collected, but this is usually inconvenient when the fibres are made using a centrifugal spinner of the type described above.

In other processes of making MMVF products, the fibres are formed by other techniques and/or travel a long distance (often with travel through a confining duct) before they are collected on a collector. Examples of such processes are in US 2,110,280, 2,830,648, 4,163,036, 4,167,404 and US 5,455,991. Although this indirect transfer of the fibres from the fibre-forming apparatus to the collector may be appropriate in some fibre-forming processes, it is inconvenient and undesirable when the fibres are formed by a centrifugal spinner of the type described above. The indirect travel of the fibres to the collector is liable to cause balling and other undesirable effects in the fibre configurations, thereby reducing the laminar characteristics of the lay-down in the web. Other materials involved in the process such as deposits of fibres and/or binder and/or shot which collect on the duct walls may also form balls with fibres, causing additional non-laminar lay down in the web.

The conventional way of collecting the fibres off a centrifugal spinner of the type described above is therefore to provide a continuously travelling collector relatively close to the spinner.

The collector is positioned in front of the spinner. It may be open to the atmosphere, but generally it is at least partially enclosed within a collecting chamber which extends forward from the spinner. The chamber may be defined by top and side walls and by the collector as most or all of the base of the chamber. The collector carries the web out of the chamber. The collector receives the cloud of fibres direct from the spinner and collects the fibres as a web, and carries the web away from the position where the fibres are initially collected as the web. By saying that the cloud of fibres is received directly from the spinner we mean that the fibres travel as a cloud only a short distance from the spinner to the collector, the distance separating the spinner from the closest point to the collector usually being not more than 5 metres, most usually not more than 3 metres. Within this short distance there is usually a sump in the base of the collector for shot and other melt debris. Throughout this distance the cloud is substantially unconfined as a result of the cross section of the chamber through which it travels to the collector being substantially greater than the cross section of the centrifugal spinner. Usually the cross sectional area of the chamber adjacent to the centrifugal spinner is at least two times, and often at least four times, the cross sectional area of the centrifugal spinner (to allow for the fibres to travel outwards from the spinner and forwards as a cloud). Confinement interferes with the air flows to the collector and the invention excludes transporting the fibres through an elongated and confining duct.

Although it is known to collect mineral fibres made by various fiberising processes on to various types of collectors, including cylindrical collectors, the conventional collectors used with centrifugal spinners of the type described above travel away from the spinners and are flat collectors and, in particular, are upwardly inclined collectors, for instance as shown in GB-A-961,900 and WO88/10242.

Accordingly the position where fibre collection initiates on the travelling collector is close to the spinner. As a result the web is very thin at and soon after this position but the web thickness increases as the web is carried on the collector towards the most distant position where fibre collection occurs. This is usually the point at which the collector travels out of the chamber. Thus the web is thinnest close to the spinner and thickest distant from the spinner.

The increasing thickness means that the amount of air sucked through the web and the collector will tend to decrease (per unit area) as the web travels away from the spinner. However there is inevitably still a large amount of air travelling along and above the collector even at positions close to the furthermost fibre collecting position, and the thickness of the web inhibits the ability of this air to be sucked through the web and the collector. It therefore either escapes from the collecting area and the chamber (and thus requires the provision of collecting and treating apparatus in order to avoid environmental pollution) or it tends to reverse direction turbulently and travel back down the collector towards the spinner, creating turbulence over most or all of the collector.

Conventionally the chamber is relatively open adjacent the spinner in the sense that there can be relatively free access of air into the end of the chamber adjacent to the spinner, and the chamber may also be relatively open at other places in the sense that no particular precautions are taken to close the chamber against the escape of air from within the chamber at locations additional to the collector.

Although it is conventional to allow uncontrolled entry of air into the chamber at the end adjacent the spinner, and often also to allow uncontrolled escape of air through positions additional to the collector, it is advantageous in some processes for the collecting chamber to be substantially closed to the uncontrolled entry or escape of air. In these systems, air is controllably supplied around and/or through the spinner whereby the fibres are blown forward from the spinner as a cloud entrained in air, and substantially all of this air is the air which is controllably supplied around and/or through the spinner. This allows for improved fibre formation and collection and so these processes produce improved quality webs and give a general improvement in the efficiency of the process.

In particular we have described in WO96/38391 apparatus in which the spinner and the collector are all within a substantially closed chamber whereby air enters the chamber substantially only through and around the spinner, and, in the illustration, there are rolls at the top and the bottom of the chamber to provide a seal between the chamber walls and the collector. Although closing the chamber against the uncontrolled entry or escape of air and providing controllable air supply around and/or through the spinner has the described advantages, the system still tends to provide a lay-down of fibres which is not as laminar as would be desirable. Accordingly there is a need to modify the system so as to improve the fibre lay-down on the collector, so as to enable the production of products having improved physical properties.

Attempts at controlling the performance of fibre lay down and gas flow in the chamber by varying gas flows have been published previously in, for instance, DK-B-111457 and DK-B-155223. However they are difficult to operate effectively and do not satisfactorily solve the problems.

According to the invention, we provide apparatus according to claim 1.

The invention also includes a process of making a web of MMVF using such an apparatus wherein the fibres are collected on the collector as it moves from the initiating position towards the spinner and the finishing position.

As a result of the invention it is possible to obtain easier control of the air flows through the collecting chamber and, in particular, over and through the collector. Accordingly the invention permits optimisation of the improvements which are already achievable in systems where the chamber is substantially closed to the uncontrolled entry or escape of air. In particular, the invention facilitates achieving a more laminar and more uniform lay down of fibres in the web, with consequential improvement in the physical properties of the web and products made from it.

The initiating position of the collector is the position on the collector where significant fibre deposition starts to occur to an extent such that it becomes apparent that a thin web is being collected on the collector. The finishing position is the position during the travel of the collector where the web reaches essentially its final mass per unit area, with little or no subsequent fibre deposition onto the web. Generally the web is separated from the collector at or soon after the finishing position.

In the invention, the collector travels towards the spinner as the collector travels from the initiating position towards the finishing position. The initiating position, and often also the finishing position, is usually on the upper surface of the collector, ie the collector makes an angle of less than 90° to a horizontal axis extending from the spinner in the direction of travel of the cloud.

Usually the collector travels towards the spinner during substantially the entire travel from the initiating position to the finishing position but in some instances the later part of the travel, towards the finishing position, can be away from the spinner. Thus the spinner can be closest to the collector at a position somewhere between the initiating and finishing positions, the closest point being at a position which is more than 70% of the distance of travel from the initiating position to the finishing position. Usually the initiating position is further from the spinner than is the finishing position.

Usually the initiating position is the point at which the collector enters the collecting chamber and the finishing position is either the point on the collector which is closest to the spinner or is some point on the collector to which the collector travels after passing the point which is closest to the spinner. The finishing position may be the point at which the collector exits from the chamber or may be a position before the exiting position.

The cloud of fibres which is entrained in air is normally received direct from the spinner. By this we mean that the fibres travel direct from the spinner to the collector as a cloud without being confined through a narrow duct. Instead, the cloud is confined solely by the cross section of the chamber and this cross section generally does not increase significantly, and may indeed reduce slightly, as the cloud approaches the collector.

By saying that the collecting chamber is substantially closed to the uncontrolled entry or escape of air we mean that the walls (including the roof and the end wall adjacent the spinner) and the fitting of the collector within the chamber are constructed deliberately to minimise the amount of uncontrolled entry and escape of air. As a result of this, the air flow field in the chamber is dominated substantially only by, the air which is supplied controllably into the chamber. Generally the air flow in the chamber is influenced predominantly by the air which is supplied around and/or through the spinner into the chamber. Thus in conventional prior art systems there has been free access of air into the end of the chamber adjacent the spinner with the result that this uncontrolled air necessarily imposes a significant influence on the air flow field, irrespective of the effect of any controlled supply of air through or around the spinner. In the invention this uncontrolled entry of air is minimised, and preferably is substantially avoided.

The air supply means for controllably supplying air around and/or through the spinner may be any air supply which allows the operator to control the amount and direction of air entry into the chamber so as to control thereby the air flow field within the chamber.

Generally the air supply means for controllably supplying air around and/or through a spinner comprises a duct which opens into the chamber and in which the spinner is mounted. When two or more spinners are mounted in each chamber they may be mounted in a single duct in side by side relationship or they may each be mounted in their own individual ducts, again in side by side relationship.

In some apparatus and processes of the invention the means for controllably supplying air into the chamber consists substantially only of means for controllably supplying air through the duct and/or through the spinner. However if desired there can be additional air inlets around the spinner in the spinner end (or sides) of the chamber by which controlled amounts of air can be fed into the chamber. For instance, at least 30%, and generally at least 50%, of the total air entering the chamber enters through the duct and spinner and often 80 - 100% of the air enters through the duct and spinner.

Generally the or each spinner includes primary air supply means at least in the outer peripheral regions of the spinner associated with the first rotor or, in a set of rotors, with the or each subsequent rotor and optionally also with the first rotor. This primary air supply means is arranged to blast primary air forward across the surface of the or each rotor so as to promote fibre formation on the rotor, in known manner. See for instance WO92/06047 and WO96/38391 (both of which are incorporated herein by reference).

Additionally, secondary air may be supplied through orifices through the spinner to promote travel of the fibres away from the spinner. Generally, most of the total secondary air enters the chamber through the collar between the duct and the spinner. Often at least 50% of the cross sectional area of the duct, where the duct opens into the chamber, is open to the flow of this secondary air around the spinner and into the chamber. Additional secondary (ie tertiary) air may also be supplied through orifices adjacent to or in the end wall of the chamber located around the duct and spinner. These orifices may be located to impose desirable air flow patterns. For instance the orifices may be positioned to control the flow patterns by providing more air in certain positions (generally down each side of the chamber) than in others. Thus there may be slots or other openings in the end wall down each side of the spinner and duct, adjacent to the side walls of the chamber, so as to allow additional tertiary air to be blown or sucked into the chamber around the spinner, in particular along the side walls. This can reduce the risk of eddies along the outermost edges of the collector and improves fibre distribution. This can be of particular value when the apparatus comprises two or more spinners in side-by-side relationship in a single duct or in separate ducts feeding a single chamber, especially when the duct or ducts do not occupy the full width of the chamber. Thus, in order to optimise the flow of air especially when the chamber is wider than the width of the duct or ducts containing the spinners, it can be desirable to provide side inlets for admitting air into the chamber between the duct (or the plurality of ducts) and the sides of the chamber. Instead of or in addition to this there can be one or more bottom inlets beneath the duct. If bottom inlets are used these can cover the whole width of the chamber.

It is possible to construct the spinner and the duct and the air supply means so as to provide substantially steady and controlled air flow conditions around the spinner and into the chamber. The amount of air can be controlled by varying the suction through the collector and by one or more of varying the primary air (and thus its induction effect), the size of the collar between the spinner and duct, the size of other inlets, the orientation of each air stream and the extent to which any secondary or tertiary air stream is forced into the chamber. The size of the collar and orifices may be adjustable during the process.

Uncontrolled escape of air is minimised and preferably is substantially entirely prevented. Thus the chamber and the fitting of the collector in it is such that as much of possible, and preferably substantially all, of the air which enters the chamber is caused to depart from the chamber by passage under suction through the collector.

In previous closed systems, the web is thinnest on the collector close to the spinner and is thickest on the furthermost point of travel of the collector out of the chamber. Since the chamber is substantially closed, air travelling upwardly to the top of the chamber necessarily has to reverse its flow back downwardly, and this promotes turbulence throughout the chamber. In the invention, however, the travel of the collector towards the spinner means that the web is thinnest at the furthermost point from the spinner. As a result, air can easily escape from the top of the chamber through the exposed collector or through the thin web and the collector, thus minimising the reversing and turbulent flow of the air at the top of the chamber. In general, as a result of having the web thinnest at the furthermost point, and thickest at the closest point, from the controlled supply of air it is easier to obtain a more laminar air flow field through the chamber and through the collector. As a result, more laminar deposition of the fibres into the web occurs, and product quality is improved.

The air flow field in conventionally constructed chambers would tend to become less stable if the width is increased, above the normal maximum of up to 2 metres, but stability of the flow field is increased as a result ot the invention and it is now possible to maintain a selectively stable air flow field even when the chamber is much wider than usual. Accordingly the invention is of particular value when the collector is wide, e.g., above 2 metres and often at least about 4 metres, e.g., 4 to 6 even 8 metres or more. Preferably therefore the invention is incorporated in apparatus and processes in which a single wide collector is used for collecting the fibres from 2, 3 or more spinners arranged next to each in the spinner end of the substantially closed collecting chamber.

The collector usually travels downwardly at an angle of at least 30° and often at least 60°, to the horizontal during at least half, and often during substantially all, of its travel between the initiating and finishing positions.

The collector is cylindrical wherein the cylinder has its axis substantially horizontal and transverse to the axis of the spinner. The use of a cylindrical collector has various advantages. A particular advantage is that it is easier to minimise constructional problems in wide collectors using a cylindrical design rather than a flat design. It is therefore possible and advantageous to provide a single cylindrical collector to collect fibres from two, and usually three, or more centrifugal spinners. The cylinder is substantially circular (and usually circular) in cross section, and so is cylindrical.

The invention is illustrated in the accompanying drawings.

In the drawings
Figure 1 is a diagrammatic side view of apparatus shown in WO96/38391 but modified to have a cylindrical collector instead of a flat collector, and it shows air flows diagrammatically;
Figure 2 is a corresponding view of a similar apparatus except that it is arranged in accordance with the invention;
Figure 3 is a rear end view of the apparatus of Figure 2;
Figure 4 is a similar view to Figure 3 of a modified form of apparatus.

The arrangement of the spinner and the collecting chamber (but excluding the construction of the collector) is preferably substantially as described in WO96/38391, the entire disclosure of which (including the drawings) is herein incorporated by reference.

The apparatus comprises a centrifugal spinner shown diagrammatically as a single unit 1 having an upper, first, rotor 2 and two or more (usually three) subsequent rotors 3, arranged within the duct 4 which has a rear end 5 which is substantially open to the atmosphere and a front end 6 which opens into and merges with and defines an opening 7 of a substantially closed collecting chamber 8. This collecting chamber 8 has top walls 9 and side walls 10 and a pit 11 for the receipt of shot and other waste.

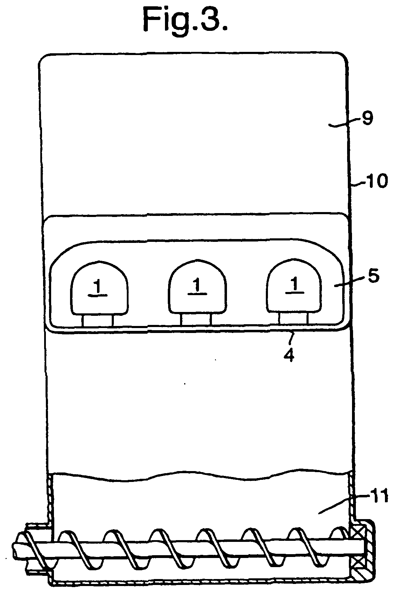

It will be appreciated that the arrangement of the spinner, duct 4 and chamber 8 can be, and preferably is, as described in more detail in WO96/38391. in particular, preferably the rotors are mounted within a duct as shown in, for instance, Figure 3 of WO96/38391.

Air is supplied around the spinner 1 by suction and/or by deliberate air supply means, for instance through the open end 5, and generally primary air is also supplied from the spinner around the surfaces of some or all of the rotors, for instance as described in WO96/38391.

During operation of the process, the rotors are caused (by motors, not shown) to rotate at high speed in conventional manner and melt is poured on to the uppermost rotor, with consequential transfer on to the other rotors and fiberisation in conventional manner to form a cloud of fibres entrained in air and this cloud travels towards the collector 31.

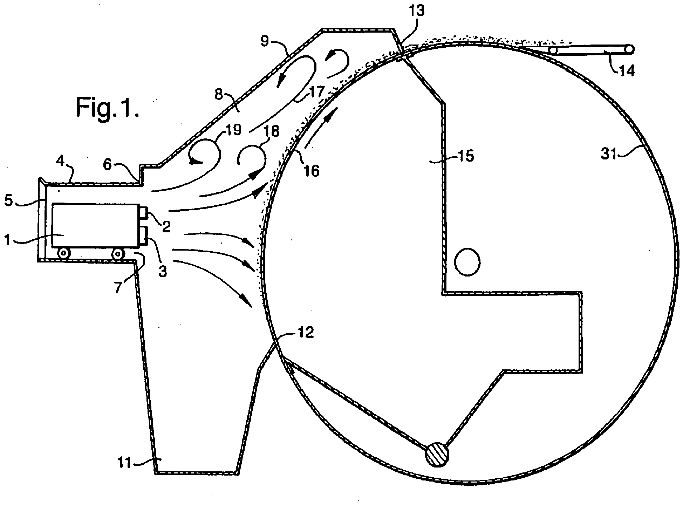

In the modification of WO96/38391 shown in Figure 1, the collector 31 is a porous cylinder which travels upwardly through the chamber. The walls 9 and 10 of the chamber substantially close the chamber against the cylinder between the position 12 where the cylinder enters the chamber and the position 13 where it leaves the chamber. Web builds up on the collector as the collector :ravels from initiating position 12 at or slightly above position 12 to the finishing position at or slightly before position 13 with the result that the web is very thin close to position 12 but is thick close to position 13. The web is then lifted off the collector by suitable collection means 14. Suction is applied through the cylinder by a suction box 15 over the interior between positions 12 and 13.

In the region of the cylinder in front of the spinner, the air flows direct towards and through the collector because the depth of the web in this region is sufficiently thin that it does not significantly impede the flow of air through the collector. However as the collector moves upwardly above the level of the spinner, for instance at around the position marked 16, the thickness of the web has accumulated to a sufficient extent that it significantly impedes the flow of air through the collector. Air moving up through the chamber, for instance as shown by arrow 17, cannot satisfactorily escape between the chamber and the cylinder at point 13 or between the walls 10 and the cylinder and thus, as shown by arrow 17, tends to reverse its flow turbulently. This necessarily tends to promote turbulence lower down the chamber, for instance as shown by arrows 18 and 19.

The consequence of this is that the lay-down of fibres on to the collector throughout the entire region extending between positions 12 and 13, and especially between positions 16 and 13, is influenced by significant turbulence in the air stream. This increases the randomness of the orientation of the fibres in the web and may lead to loss of wool in the waste pit.

In the invention, the apparatus shown in Figure 1 is modified by reversing the direction of the cylinder.

The collector 31 now enters the chamber at a collector inlet position 20 which serves as the initiating position, and leaves the chamber at collector outlet position 21, which serves as the finishing position. Position 20 is located above the top rotor, i.e., above a horizontal line 22 drawn forwardly from the top rotor 2 (i.e., from the uppermost perimeter of the top rotor 2) as shown by line 22.

Outlet position 21 is below the inlet position 20. The angle α between a line 23 which extends in a horizontal direction away from the spinner from the position 21 and a line connecting positions 21 and 20 is preferably in the range from about 30° to about 100°. If α is less than 30°, position 20 is undesirably distant from the spinner. If α is greater than 100°, an undesirably large amount of vacuum may be required to hold the web on the collecting surface. Usually α is at least 45°. Generally it is not above 900 and preferably it is not above 80°. Values of around 50 to 70° are usually appropriate.

The outlet position may be above the spinner but is generally level with or below the spinner. In particular, the angle β between a horizontal line extending from the lowermost edge of the lowermost rotor to position 21 may range from a small angle above the horizontal, for instance up to 10 or 20° or 25° above the horizontal, to a larger angle below the horizontal, generally not more than 50° below the horizontal. Often the angle β is around zero to 30° below the horizontal.

The web will have substantial thickness when it reaches the position 21 and it is desirable to provide a baffle, shown diagrammatically as a seal such as a sealing drum or roller 26, to seal the walls 27 against the web or, during start-up of the process before the web is built up, against the cylindrical collector 31. This baffle 26 may be provided with appropriate resilient biasing in order to provide an adequate seal to achieve satisfactory minimisation of the escape of air at position 21. The sides of the chamber are substantially sealed against the collector. As a result, substantially all the air which enters the chamber exits the chamber as a result of being sucked through the collector between the initiating and finishing positions.

A blow-off box 28 may be provided just below position 21 in order to blow the web down on to a web collecting system 29 and 39 by which the web may be taken off the cylinder 31 and led away to a cross-lapping or other subsequent treatment stage.

It is preferred that the angle between a tangent to the cylinder at position 29 and the horizontal at position 29 is never too low, because at low angles there is a risk of the air blowing along the surface of the web near the top of the chamber and rolling the fibres along the surface of the web and interfering with a previously satisfactory laminar lay-down of fibres. By ensuring that the angle n between lines 23 and 24 is always at least around 30° this risk is minimised, but preferably the angle between the tangent at position 29 and the horizontal at position 29 is at least about 19 or 20° and preferably it is at least about 30° for instance up to 45° or even 60°.

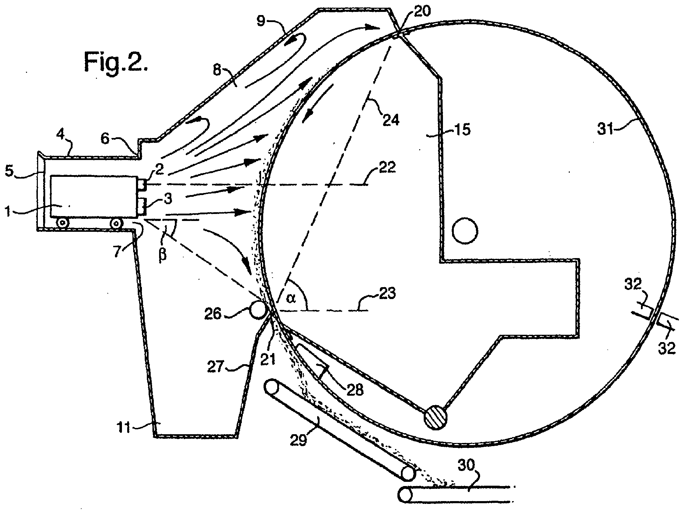

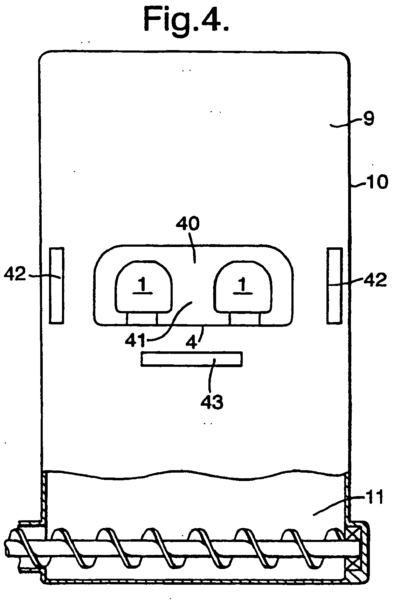

An advantage of having the collector in the form of a cylinder 31 is that the cylinder can be constructed to be relatively rigid and does not have to flex as it rotates, in the manner that is required when the conveyor has a flat length of travel as shown in, for instance, Figure 2 of WO96/38391. Since the cylinder can be constructed to be substantially rigid, it can be constructed to have considerable axial length without creating any significant engineering problems. The preferred embodiment of the invention, using a collecting cylinder, is therefore advantageously applied to wide collecting chambers, for instance chambers that serve to collect from at least two and often three (or more) adjacent spinners as shown diagrammatically in Figure 3. As shown Fig. 4, there can be side air slots 42 and bottom air slots 43 in the end wall of the chamber, adjacent to the spinners. The bottom air slots may be as shown or they may cover the whole width of the chamber. The side and/or bottom slots may be adjustable, to control the amount of air induced through them, and/or they may be supplied by adjustable blowers. Up to 60 or 70%, usually around 10 to 50%, of the total primary, secondary and tertiary air (which in practice is the total amount that is sucked through the collector) may enter through the slots 42 and 43. It will be found that if the amount of tertiary air is increased too much, there will tend to be increased turbulence in the chamber and there will tend to be reduced quality of fibre lay-down. Accordingly suitable amounts can be determined experimentally. In the process of this invention (and in the process of WO96/38391) the higher values we indicate above (and especially values in the range 50 to 70%, or more, of total air) are usually only appropriate when the width of the chamber close to the spinners is significantly wider than the combined width of the spinners. An example is when the chamber is wide enough to accommodate three spinners in side-by-side relationship but actually contains only two such spinners.

Conveniently the cylinder is made of apertured sheet material, for instance steel or other metal sheet provided with holes, usually a pattern of cylindrical or other holes. The sheet can, if required for strength, be thick, e.g., up to 5mm thick or more.

Appropriate high pressure water jets 32 blasting inwardly and/or outwardly may be located at an appropriate location in order to clean the cylinder.

The proportion of the periphery of the cylinder between the inlet and outlet positions 20 and 21 is usually below 50%, preferably below 40% and generally below 30% of the total periphery, but is usually at least 15% and usually at least 20%. of the total periphery.

The speed of travel of the cylinder can be selected according to the rate of production of fibres and the basis weight of the web which is required. Typically the peripheral speed of the cylinder is in the range 40 to 300 metres/minute (often around 140 to 210 metre per minute) The basis weight of the web which is collected on the cylinder is generally in the range 100 to 750g/m², often around 200 to 350g/m².

Binder and other additives may be incorporated in the web in conventional manner, for instance by being injected into the cloud of fibres from the spinner or from nozzles positioned around the spinner or in the chamber, in conventional manner.

In addition to achieving more laminar lay-down of the fibres and of allowing convenient construction of an effective collection system which is very wide, the invention also gives benefits as regards minimisation of unwanted escape of air contaminated with fibre, binder or other material from the spinner into the atmosphere. This improvement is manifested by the fact that very effective seals can be provided at positions 20 and 21 (and around the sides of the chamber) without consequential reduction in web quality due to increased turbulence and because the contamination due to the blow-off at point 28 is less than might be expected. This may be a consequence of the better distribution and trapping of fibres, binder and other material in the web.

Because of the improved control of the air flow in the chamber and the reduced contamination from the chamber whilst improving fibre lay-down, it is possible to increase the air flows around the spinner and, in particular, the primary air flows from around the individual rotors. This improves the quality of the fibres which are formed and allows for improvement in the overall properties of the final product. Thus the new configuration allows the fibre formation to be modified in a beneficial manner without having adverse consequences on fibre lay-down or the environment.

The radius of the cylinder is usually at least 1 metre and is typically 2 to 6 metres, usually 3 to 5 metres. The distance from the spinner to the cylinder is usually at least 1 metre and may be 2 to 4 metres but is generally les than 5 metres.

The melt which is used for pouring on to the first rotor and forming the fibres can be any convenient vitreous melt suitable for spinning by a cascade spinner or other centrifugal spinner of the type described herein. Usually it is of a melt which is known as a stone, rock or slag melt.

The web can be converted into any desired final product by conventional techniques, e.g., by cross lapping and/or oven curing and compressing.

The invention is of particular value when the web is cross-lapped and is wide, usually more than 2.5 metres and generally 3 or 4 metres or more, and is cross-lapped, since it is possible to make such a product to a good quality at a high rate of melt flow without the deterioration in properties that are usually encountered at high melt flow. This advantage is particularly valuable when the cross-lapped product has a density of 5 to 50 kg/m³, and is cut lengthwise (transverse to the direction of each lap of web) and packed as a compressed roll, as described in GB 0019999.2.

The invention is also of particular value when the web (which may be conventional width or wide) is cross-lapped to make a batt which is more than 2.5, generally 3 or 4 metres or more wide. By making a final product as wide as this, and by providing a wide curing oven and other handling apparatus, productivity can be increased without increasing the length of the total plant. Also, the cross-lapped wide product has improved properties when it is cut transversely (in the approximate length of direction of each lap of web), eg to provide a low density roll having a length of at least 3 metres.

The web or batt may be formed into any conventional MMVF products such as heat insulation, fire protection, acoustic insulation and regulation, or horticultural growth media (which are usually bonded) or fibres for reinforcement or as fillers (which are usually unbonded).

## Claims

1. Apparatus for making a web of man-made vitreous fibres comprising
a centrifugal spinner (1) having a first rotatable rotor or a set of rotatable rotors consisting of a first rotor (2) and one or more subsequent rotors (3), wherein the or each rotor is mounted for rotation about a substantially horizontal axis whereby melt poured onto the first rotor (2) is thrown off as fibres or, in a set of rotor, is thrown onto the or each subsequent rotor (3), and optionally off the first rotor (2), as fibres,
motor means for rotating the or each rotor (2, 3) a collecting chamber (8) which extends forwards from the spinner (1) and which is substantially closed to the uncontrolled entry or escape of air,
air supply means for controllably supplying air around and through the spinner whereby the fibres are blown forward from the spinner (1) as a cloud of fibres entrained in air substantially all of which is the air which is controllably supplied around and through the spinner,
a single collector (31) mounted in the collecting chamber (8) to receive the cloud of fibres from the spinner (1) suction means (15) for applying suction through the collector and thereby collecting fibres from the cloud on the collector as a web, wherein the collector is substantially cylindrical,
and means for causing the collector (31) to travel within the collecting chamber (8) from an initiating position (20) where fibre collection initiates to a finishing position (21) where the fibre collection finishes, **characterised in that** the collector (31) is mounted to travel towards the spinner (1) as the collector (31) travels from the initiating position (20) towards the finishing position (21), wherein the collector is mounted to travel downwardly from the initiating position (20) to the finishing position (21), wherein the spinner is closest to the collector at a position somewhere between the initiating and finishing positions, the closest point being a position which is more than 70% of the distance of travel from the initiating position to the finishing position.

2. Apparatus according to claim 1 in which the initiating position (20) is further from the first rotor of the spinner (1) than is the finishing position (21).

3. Apparatus according to claim 1 or claim 2 in which the collector initiating position (20) is above a horizontal line (22) drawn from the first rotor (2) and there is an angle α from 30° to 100° between a horizontal line (23) drawn from the finishing position (21) and leading away from the spinner (1) and a line (24) drawn between the collector finishing and initiating positions (20, 21).

4. Apparatus according to claim 3 which the angle α is 45 to 80°.

5. Apparatus according to any one of the preceding claims in which the finishing position (21) is at a position such that a line drawn from the finishing position (21) to the lowermost rotor, or the rotor, of the spinner (1) makes an angle β between 20° above the horizontal to 50° below the horizontal.

6. Apparatus according to claim 5 in which the angle β is from 0 to 30° below the horizontal.

7. Apparatus according to any preceding claim in which the collector is at least 4 metres wide.

8. Apparatus according to claim 7 in which the apparatus includes at least two centrifugal spinners in side-by-side configuration and the cylindrical collector is mounted to receive the clouds of fibres from both or all of them.

9. Apparatus according to any preceding claim in which the spinner is mounted in a duct which opens onto the chamber, and the means for controllably supplying air into the chamber consists substantially only of means for controllably supplying air through the duct and through the spinner and optionally inlets into the chamber for supplying air into the chamber down each side of the chamber.

10. Apparatus according to any preceding claim in which the means for controllably supplying air through the spinner include primary air supply means at least in the outer peripheral regions of the spinner associated with the first rotor or, in a set of rotors, with each subsequent rotor and optionally with the first rotor for blasting primary air forwards across the surface of the or each rotor with which the primary air supply means are associated.

11. Apparatus according to claim 9 in which at least 50% of the cross sectional area of the duct where the duct opens into the chamber is open to the flow of air around the spinner and onto the chamber as a result of the air being sucked through the duct by the suction means and the construction of the spinner and the duct is such as to provide substantially steady air flow conditions around the spinner.

12. Apparatus according to any preceding claim in which the collector is mounted to travel from outside the chamber and to enter the chamber at the initiating position and to leave the chamber at the finishing position and seals are provided at the initiating and finishing positions to substantially prevent entry or escape of air at these positions.

13. Apparatus according to claim 12 in which the seal at the finishing position is resiliently urged towards the collector whereby it seals against the web carried out of the chamber on the collector at the finishing position.

14. A process of making a web of vitreous fibres using the apparatus according to any preceding claim.

15. A process of making a bonded batt of vitreous fibres comprising forming a web of vitreous fibres and uncured binder by a process according to claim 14, cross lapping the web and then curing the binder.

## Patentansprüche

1. Vorrichtung zur Herstellung einer Bahn aus künstlichen Glasfasern, umfassend:
Einen Zentrifugalspinner (1) mit einem ersten drehbaren Rotor oder einem Satz von drehbaren Rotoren, der aus einem ersten Rotor (2) und einem oder mehr nachfolgenden Rotoren (3) besteht, wobei der oder jeder Rotor zur Drehung um eine im Wesentlichen horizontale Achse montiert ist, wodurch Schmelze, die auf den ersten Rotor (2) gegossen wird, als Fasern abgeworfen wird, oder, in einem Satz von Rotoren, auf den oder jeden nachfolgenden Rotor (3) geworfen wird, und optional vom ersten Rotor (2), als Fasern abgeworfen wird,
Motormittel zum Drehen des oder jedes Rotors (2, 3), eine Sammelkammer (8), die sich am Spinner (1) nach vorn erstreckt und die gegen unkontrollierten Eintritt oder Austritt von Luft verschlossen ist,
Luftversorgungsmittel zur kontrollierbaren Versorgung mit Luft um und durch den Spinner, wodurch die Fasern vom Spinner (1) nach vorn als eine Wolke von Fasern geblasen werden, die in der Luft mitgeführt werden, die im Wesentlichen alle Luft ist, die kontrollierbar um und durch den Spinner zugeführt wurde,
einen einzelnen Sammler (31), der in der Sammelkammer (8) montiert ist, um die Wolke von Fasern ab dem Spinner (1) zu empfangen, Saugmittel (15) zum Anwenden von Saugwirkung durch den Sammler und dadurch Sammeln von Fasern aus der Wolke auf dem Sammler als eine Bahn, wobei der Sammler im Wesentlichen zylindrisch ist,
und Mittel, um zu bewirken, dass sich der Sammler (31) innerhalb der Sammelkammer (8) aus einer Ausgangsposition (20), wo Fasersammlung beginnt, in eine Endposition (21) wo die Fasersammlung endet, **dadurch gekennzeichnet, dass** der Sammler (31) montiert ist, sich in Richtung des Spinners (1) zu bewegen sowie sich der Sammler (31) aus der Ausgangsposition (20) in Richtung der Endposition (21) bewegt, wobei der Sammler montiert ist, sich aus der Ausgangsposition (20) nach unten zur Endposition (21) zu bewegen, wobei der Spinner dem Sammler in einer Position irgendwo zwischen den Ausgangs- und Endpositionen am nächsten ist, wobei der am nächsten gelegene Punkt eine Position ist, die mehr als 70% der Weglänge von der Ausgangsposition zur Endposition beträgt.

2. Vorrichtung nach Anspruch 1, bei welcher die Ausgangsposition (20) vom ersten Rotor des Spinners (1) weiter als die Endposition (21) entfernt ist.

3. Vorrichtung nach Anspruch 1 oder Anspruch 2, bei welcher der Sammler (20) oberhalb einer horizontalen Linie (22) liegt, die ab dem ersten Rotor (2) gezogen ist und es liegt ein Winkel α von 30° bis 100° zwischen einer horizontalen Linie (23), die ab der Endposition (21) gezogen ist und vom Spinner (1) weg führt und einer Linie (24) vor, die zwischen dem Sammler und den End- und Ausgangspositionen (20, 21) gezogen ist.

4. Vorrichtung nach Anspruch 3, bei welcher der Winkel a 45 bis 80° beträgt.

5. Vorrichtung nach einem der vorhergehenden Ansprüche, bei welcher die Endposition (21) in einer Position derart ist, dass eine von der Endposition (21) zum untersten Rotor, oder dem Rotor, des Spinners (1) gezogene Linie einen Winkel β zwischen 20° über der Horizontalen bis 50° unter der Horizontalen bildet.

6. Vorrichtung nach Anspruch 5, bei welcher der Winkel β von 0 bis 30° unter der Horizontalen liegt.

7. Vorrichtung nach einem vorhergehenden Anspruch, bei welcher der Sammler wenigstens 4 Meter breit ist.

8. Vorrichtung nach Anspruch 7, bei welcher die Vorrichtung wenigstens zwei Zentrifugalspinner in Seite an Seite Konfiguration einschließt und der zylindrische Sammler montiert ist, die Faserwolken aus beiden oder allen davon zu empfangen.

9. Vorrichtung nach einem vorhergehenden Anspruch, bei welcher der Spinner in einem Kanal montiert ist, der sich auf die Kammer öffnet, und das Mittel zur kontrollierbaren Zuführung von Luft in die Kammer im Wesentlichen nur aus Mitteln zur kontrollierbaren Zuführung von Luft durch den Kanal und durch den Spinner, und optional Einlässen in die Kammer zur Zuführung von Luft in die Kammer, auf jeder Seite der Kammer nach unten besteht.

10. Vorrichtung nach einem vorhergehenden Anspruch, bei welcher die Mittel zur kontrollierbaren Zuführung von Luft durch den Spinner, primäre Luftversorgungsmittel wenigstens in den äußeren peripheren Bereichen des Spinners einschließt, der mit dem ersten Rotor oder, in einem Satz von Rotoren, mit jedem nachfolgenden Rotor und optional mit dem ersten Rotor assoziiert ist, um primäre Luft nach vorn über die Oberfläche des oder jedes Rotors, mit dem die primären Luftversorgungsmittel assoziiert sind, zu blasen.

11. Vorrichtung nach Anspruch 9, bei welcher wenigstens 50% der Querschnittsfläche des Kanals, wo sich der Kanal in die Kammer öffnet, für den Luftstrom um den Spinner herum und auf die Kammer offen ist, infolge dessen, dass Luft von den Saugmitteln durch den Kanal angesaugt wird und die Konstruktion des Spinners und des Kanals so ist, im Wesentlichen stetige Luftstrombedingungen, um den Spinner herum bereitzustellen.

12. Vorrichtung gemäß einem vorhergehenden Anspruch, bei welcher der Sammler montiert ist, sich von außerhalb der Kammer zu bewegen und in die Kammer in der Ausgangsposition einzutreten und die Kammer in der Endposition zu verlassen, und Dichtungen an den Ausgangs- und Endpositionen bereitgestellt sind, um im Wesentlichen den Eintritt oder Austritt von Luft in diesen Positionen zu verhindern.

13. Vorrichtung nach Anspruch 12, bei welcher die Dichtung in der Endposition nachgiebig in Richtung des Sammlers gedrängt wird, wodurch sie gegen die Bahn abdichtet, die auf dem Sammler in der Endposition aus der Kammer getragen wird.

14. Verfahren zur Herstellung einer Bahn aus Glasfasern unter Verwendung der Vorrichtung nach einem vorhergehenden Anspruch.

15. Verfahren zur Herstellung einer verklebten Matte aus Glasfasern, welches die Bildung einer Bahn aus Glasfasern und nicht gehärtetem Bindemittel durch ein Verfahren nach Anspruch 14, Kreuzlegung der Bahn und danach das Härten des Bindemittels umfasst.

## Revendications

1. Appareil servant à fabriquer un tissu synthétique en fibres vitreuses comportant
une unité centrifugeuse de défibrage (1) dotée d'un premier rotor capable de tourner ou d'un ensemble de rotors capables de tourner, comprenant un premier rotor (2) et un ou plusieurs rotors ultérieurs (3), **caractérisé en ce que** le rotor ou bien chacun des rotors est monté de manière à pouvoir tourner autour d'un axe essentiellement horizontal, **caractérisé en ce que** le matériau en fusion versé sur le premier rotor (2) est évacué sous forme de fibres ou bien, dans le cas d'un ensemble de rotors, il est évacué sous forme de fibres sur le rotor ultérieur ou sur chaque rotor ultérieur (3) et, de manière optionnelle, il quitte le premier rotor (2) sous forme de fibres,
un moteur servant à faire tourner le rotor ou bien chaque rotor (2, 3), une chambre de collecte (8) qui s'étend en avant à partir de l'unité de défibrage (1) qui est essentiellement fermée et empêche la pénétration ou l'échappement non contrôlés de l'air,
une source d'air servant à alimenter de façon contrôlée l'air autour et à travers l'unité de défibrage, **caractérisée en ce que** les fibres sont propulsées par jet d'air vers l'avant à partir de l'unité de défibrage (1) sous forme de nuage de fibres entraînées dans l'air, dont la presque totalité est l'air qui est alimenté de façon contrôlée autour et à travers l'unité de défibrage,
un simple collecteur (31) monté dans la chambre de collecte (8) et servant à recevoir le nuage de fibres venant de l'aspirateur (15) de l'unité de défibrage (1), qui sert à exercer l'aspiration dans le collecteur et à collecter ainsi les fibres du nuage sur le collecteur sous forme de tissu, **caractérisée en ce que** le collecteur est de forme essentiellement cylindrique,
et un moyen qui fait déplacer le collecteur (31) à l'intérieur de la chambre de collecte (8) à partir d'une position initiale (20) où commence la collecte des fibres, et jusqu'à une position finale (21) où se termine la collecte des fibres, **caractérisé en ce que** le collecteur (31) est monté de manière à se déplacer vers l'unité de défibrage (1) alors que le collecteur (31) se déplace à partir de la position initiale (20) et vers la position finale (21), **caractérisé en ce que** le collecteur est monté de manière à se déplacer vers le bas à partir de la position initiale (20) et vers la position finale (21), **caractérisé en ce que** l'unité de défibrage se trouve le plus près du collecteur dans une position quelque part entre la position initiale et la position finale, le point le plus proche étant une position qui se trouve à plus de 70% de la distance de déplacement entre la position initiale et la position finale.

2. Appareil selon la revendication 1, où la position initiale (20) est plus éloigné du premier rotor de l'unité de défibrage (1) que la position finale (21).

3. Appareil selon la revendication 1 ou la revendication 2, où la position initiale (20) du collecteur se trouve au-dessus d'une ligne horizontale (22) tracée à partir du premier rotor (2), et il existe un angle α compris entre 30° et 100° entre une ligne horizontale (23) tracée à partir de la position finale (21) et partant de l'unité de défibrage (1) et une ligne (24) tracée entre les positions finale et initiale (20, 21) du collecteur.

4. Appareil selon la revendication 3, où l'angle α est compris entre 45 et 80°.

5. Appareil selon l'une quelconque des revendications précédentes, où la position finale (21) est située dans un endroit tel qu'une ligne tracée à partir de la position finale (21) jusqu'au rotor le plus bas, ou le rotor t de l'unité de défibrage (1) se trouve à un angle β compris entre 20° au-dessus de l'horizontale et 50° au-dessous de l'horizontale.

6. Appareil selon la revendication 5, où l'angle β au-dessous de l'horizontale est compris entre 0 et 30°.

7. Appareil selon l'une quelconque des revendications précédentes, où le collecteur mesure au moins 4 mètres de large.

8. Appareil selon la revendication 7, où l'appareil comprend au moins deux unités de défibrage juxtaposées et où le collecteur cylindrique et monté de manière à recevoir les nuages de fibres provenant de ces deux unités de défibrage ou bien de toutes les unités de défibrage.

9. Appareil selon l'une quelconque des revendications précédentes, où l'unité de défibrage est montée dans un conduit qui s'ouvre dans la chambre, et où le moyen servant à alimenter de façon contrôlée l'air dans la chambre comporte essentiellement un moyen servant à alimenter de façon contrôlée l'air à travers le conduit et à travers l'unité de défibrage et aussi, en option, des orifices d'admission de na la chambre servant à alimenter de l'air dans la chambre le long de chaque côté de la chambre.

10. Appareil selon l'une quelconque des revendications précédentes, où le moyen servant à alimenter de façon contrôlée l'air à travers l'unité de défibrage comporte un moyen d'alimentation d'air primaire au moins dans les zones périphériques extérieures de l'unité de défibrage qui est associée au premier rotor ou bien, dans un groupe de rotors, à chaque rotor ultérieur et, de manière optionnelle, au premier rotor chargé de souffler de l'air primaire vers l'avant sur la surface du rotor, ou de chacun des rotors, avec lesquels est associé le moyen d'alimentation d'air primaire.

11. Appareil selon la revendication 9, où au moins 50% de la superficie en coupe du conduit à l'endroit où celui-ci s'ouvre dans la chambre sont exposés au débit d'air autour de l'unité de défibrage et dans la chambre du fait que l'air est aspiré à travers le conduit par le moyen d'aspiration, et la construction de l'unité de défibrage et du conduit assure un écoulement d'air essentiellement stable autour de l'unité de défibrage.

12. Appareil selon l'une quelconque des revendications précédentes, où le collecteur est monté de manière à se déplacer depuis l'extérieur de la chambre et à pénétrer dans la chambre à partir de la position initiale puis à quitter la chambre à la position finale, et des joints d'étanchéité sont prévus aux positions initiale et finale pour empêcher en grande partie la pénétration ou l'échappement de l'air dans ces positions.

13. Appareil selon la revendication 12, où le joint d'étanchéité dans la position finale est poussé de manière élastique vers le collecteur, assurant ainsi l'étanchéité du tissu porté hors de la chambre sur le collecteur dans la position finale.

14. Procédé et appareil de production d'un tissu en fibres vitreuses au moyen de l'appareil selon l'une quelconque des revendications précédentes.

15. Procédé servant à fabriquer un matelas contrecollé en fibres vitreuses qui consiste entre autres à produire un tissu en fibres vitreuses et un liant non durci au moyen d'un procédé selon la revendication 14, à assurer l'enroulage croisé du tissu puis à durcir le liant.
